# EUROPÄISCHE PATENTSCHRIFT

(11) **EP 0 629 081 B1**
(45) Veröffentlichungstag und Bekanntmachung des Hinweises auf die Patenterteilung: **17.02.1999**
(21) Anmeldenummer: 94201605.6
(22) Anmeldetag: 06.06.1994
(51) Int. Cl.: H04N 5/21, H04N 17/00

(54) **Verfahren zur Bestimmung des Rauschanteils in einem Videosignal**
Method for determining the noise component of a video signal
Procédé pour déterminer le composant de bruit d'un signal vidéo

(30) Priorität: 11.06.1993 DE 4319343
(43) Veröffentlichungstag der Anmeldung: 14.12.1994
(73) Patentinhaber: Philips Patentverwaltung GmbH, 22335 Hamburg (DE); Koninklijke Philips Electronics N.V., 5621 BA Eindhoven (NL)
(72) Erfinder: Wischermann, Gerhard, D-20097 Hamburg (DE)
(74) Vertreter: von Laue, Hanns-Ulrich, Dipl.-Ing.

(56) Entgegenhaltungen:
- EP-A- 0 502 615
- US-A- 4 364 087
- PATENT ABSTRACTS OF JAPAN vol. 12, no. 281 (E-641) 2. August 1988 & JP-A-63 059 273 (NEC HOME ELECTRONICS LTD.) 15. März 1988
- IEEE TRANSACTIONS ON ACOUSTICS, SPEECH AND SIGNAL PROCESSING, Bd.37, Nr.8, August 1989 Seiten 1293 - 1298 KUNDU AMLAN ET AL. 'Double Window Hodges-Lehman (D) Filter and Hybrid D-Median Filter for robust Image Smoothing'

## Beschreibung

Die Erfindung geht aus von einem Verfahren zur Bestimmung des Rauschanteils in einem Videosignal nach der Präambel des Anspruchs 1 und betrifft ferner eine Schaltungsanordnung zur Durchführung des Verfahrens.

Zur Reduktion von Rauschstörungen in Videosignalen sind Schaltungen bekannt, welche auf dem Prinzip der zeitlich rekursiven Filterung beruhen. Durch die Rückführung eines um ein Bild verzögerten Ausgangssignals auf den Eingang eines Rekursivfilters wird der Rauschanteil über mehrere Bildperioden gemittelt und damit verringert.

Hierbei ist üblicherweise ein Bewegungsdetektor vorgesehen, der die Größe des zurückgeführten Videosignals in Abhängigkeit von im Bild vorliegender Bewegung steuert. Bei einem bekannten System nach DE-C- 31 21 597 wird ein Bewegungssignal durch Differenzbildung zwischen dem unverzögerten und dem verzögerten Videosignal gewonnen. In diesem Bewegungssignal ist jedoch zunächst wie beim Eingangssignal Rauschen vorhanden, welches den Bewegungsdetektor negativ beeinflußt.

So kann starkes Rauschen als Bewegung fehlinterpretiert werden, und das rekursive Filter erreicht nicht die optimale Rauschreduktion. Um dies nicht zur Steuerung des rekursiven Filters heranzuziehen, wird gleichverteiltes Rauschen mit Hilfe einer Schwellwertschaltung und eines Tiefpasses unterdrückt.

Der vorliegenden Erfindung liegt demgegenüber die Aufgabe zugrunde, in dem durch Differenzbildung zwischen dem unverzögerten und dem verzögerten Signal erzeugten Bewegungsssignal die anteilige Rauschamplitude zu messen , um die Größe des Schwellwertes einzustellen.

Diese Aufgabe wird durch die im Kennzeichen des Patentanspruchs 1 angegebenen Merkmale gelöst.

Das erfindungsgemäße Verfahren mit den kennzeichnenden Merkmalen des Patentanspruchs 1 hat den Vorteil, daß mit geringen Mitteln nur der Rauschanteil des Videosignals erfaßt wird, der anschließend in einfacher Weise in Zusammenhang mit der Bewegungserkennung von Videosignalen z. B. bei der Rauschreduktion, bei der Fernseh-Standardkonversion usw. verwendet werden kann.

Durch die in den abhängigen Ansprüchen aufgeführten Maßnahmen sind vorteilhafte Weiterbildungen und Verbesserungen des im Patentanspruch 1 angegebenen Verfahrens möglich. So besteht der Vorteil eines zweidimensionalen Fensters darin, daß die niederfrequenten Rauschanteile durch die Messung noch besser erfaßt werden können.

In weiteren abhängigen Ansprüchen ist eine vorteilhafte Schaltung zur Durchführung des erfindungsgemäßen Verfahrens angegeben.

Ein Ausführungsbeispiel der Erfindung ist in der Zeichnung dargestellt und in der nachfolgenden Beschreibung näher erläutert. Es zeigen:
- Fig. 1: ein Blockschaltbild eines erfindungsgemäßen Rauschdetektors.
- Fig. 2: Zeitdiagramme des Bewegungssignals verschiedener Zeilen,
- Fig. 3: Zeitdiagramme
a) der Suchfenster innerhalb einer Zeile
b) der diesen entsprechenden Abschnitte für die Übertragung des jeweiligen Maximalwertes,
- Fig. 4: Zeitdiagramme der Suchfenster für die Ermittlung der Maximal- und Minimalwerte.

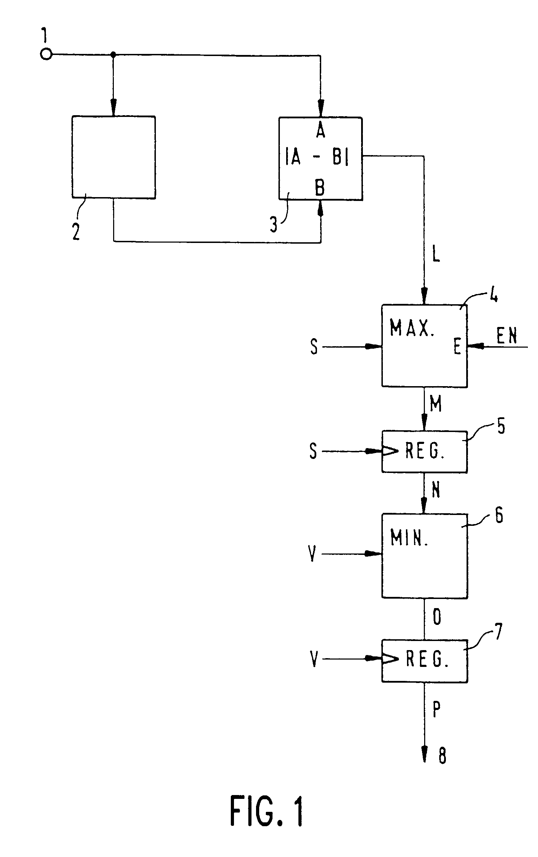

In dem Blockschaltbild nach Fig. 1 liegt an Klemme 1 ein mit Rauschstörungen behaftetes Videosignal an, welches einerseits direkt und andererseits über eine Verzögerungseinrichtung 2 den Eingängen einer Einrichtung 3 zur Differenzwert- und Absolutwertbildung zugeführt wird. Die Verzögerungseinrichtung 2 verzögert das Videosignal um die Dauer eines Vollbildes. Derartige Verzögerungseinrichtungen sind hinreichend bekannt und werden zweckmäßigerweise mit Hilfe eines digitalen Vollbildspeichers realisiert. In der Einrichtung 3 wird die Differenz zwischen dem unverzögerten und dem verzögerten Videosignal und davon der Absolutwert gebildet, da der Einfluß auf die Rauschverminderung vom Vorzeichen der Änderung des Bildinhalts unabhängig sein soll.

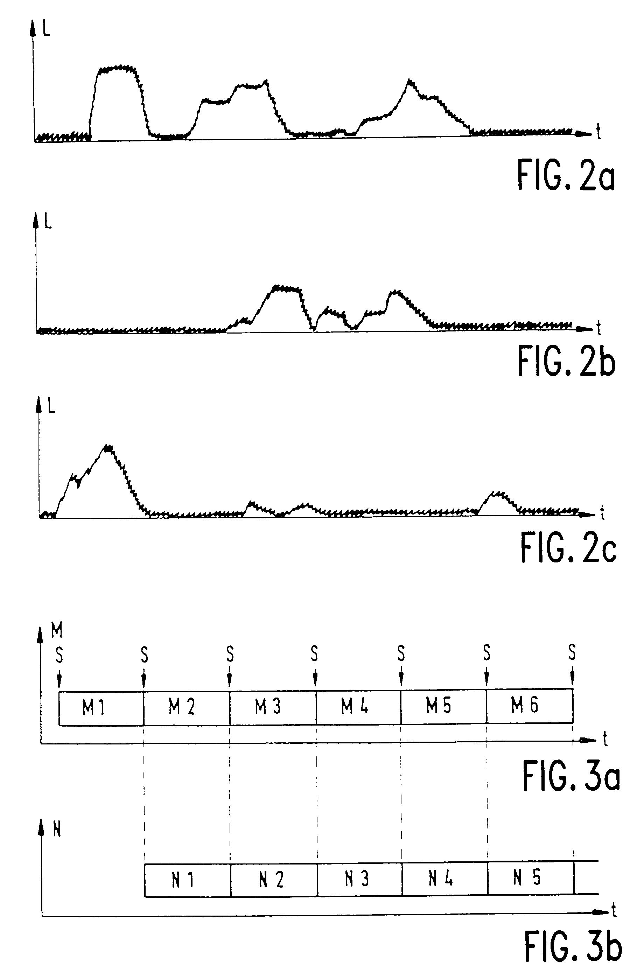

Das am Ausgang abnehmbare sog. Bewegungssignal L besteht bei unbewegten Bildern praktisch nur aus dem gleichgerichteten Rauschanteil des Videosignals, bei bewegten Bildern jedoch aus dem Betrag der Differenzsignalwerte zweier aufeinander folgender Bilder mit überlagertem gleichgerichteten Rauschen, wie beispielsweise in Fig. 2 dargestellt. Die Zeitdiagramme a), b), c) von Fig. 2 zeigen jeweils die Signalamplituden je einer Zeile, wobei die hohen Amplituden von Bewegung und die überlagerten kleinen Amplituden vom Rauschen herrühren.

Das Signal L wird nun einer Maximum-Spitzenwert-Meßschaltung 4 zugeführt, in welcher innerhalb eines Suchfensters das Amplitudenmaximum festgestellt wird.

Im Falle von unbewegten Bildern stellt die obere Hüllkurve den Spitzenwert des Rauschanteils im Eingangsbild dar, welcher durch Suchen des Maximums ermittelt werden kann. Die Suche wird jeweils mit einem Startimplus S mit dem Anfangswert M = 0 initialisiert. Tritt während einer Suche ein größerer Wert (L>M) auf, so wird er als neuer Referenzwert detektiert, Mit dem nächsten Startimpuls S wird der letzte M-Wert in ein Register 5 übernommen und gleichzeitig eine neue Maximum-Suche gestartet. Am Ende eines jeden Suchabschnittes liefert das Signal N den gesuchten Spitzenwert des Rauschens. In der horizontalen und vertikalen Austastlücke des Videosignals wird die Maximum-Suche durch einen an den Steuereingang E angelegten Impuls EN unterbrochen.

In Fig. 3 a) sind die beispielsweise während einer Zeile vorgesehenen Suchfenster M1 bis M6 mit verschiedenen M-Werten als Kästchen dargestellt, an deren Beginn jeweils ein Startimpuls S angedeutet ist. In Fig. 3 b) sind die entsprechenden Zeitabschnitte der Suchfenster N1 bis N5 für das Signal N ebenfalls als Kästchen dargestellt.

Bei bewegtem Bildinhalt - gemäß Fig. 2 - muß von den Signalwerten N über einen größeren Zeitraum ein Minimum ermittelt werden. In Fig. 2 kann man erkennen, daß auch bei Bewegung einzelne Zeilen oder auch Teile von Zeilen unverändert bleiben, d. h. nur den Rauschanteil aufweisen. Unter der Voraussetzung, daß die Suchfenster für die Suche des Amplitudennmaximums genügend klein gehalten werden, wird mit sehr großer Sicherheit über einen größeren Zeitraum (z. B. eine oder mehrere Teilbildperioden) mindestens ein Wert des Signals N auftreten, welcher nicht durch Bewegung beeinflußt ist.

Das Signal N wird daher einer Minimum-Spitzenwert-Meßschaltung 6 zugeführt, welche mit V-frequenten Impulsen gestartet wird, wodurch die Messung des Signalminimums wenigstens über eine Teilbildperiode durchgeführt wird. Der Minimum-Signalwert O wird im nachfolgenden, ebenfalls mit V-frequenten Impulsen getakteten Register 7 festgehalten und am Ende der Meßperiode als gesuchter Spitzenwert des Rauschens an den Ausgang 8 abgegeben. Mit diesem Ausgangs-Rauschsignal P kann dann das an Klemme 1 anliegende Videosignal vor der weiteren Verarbeitung entstört werden.

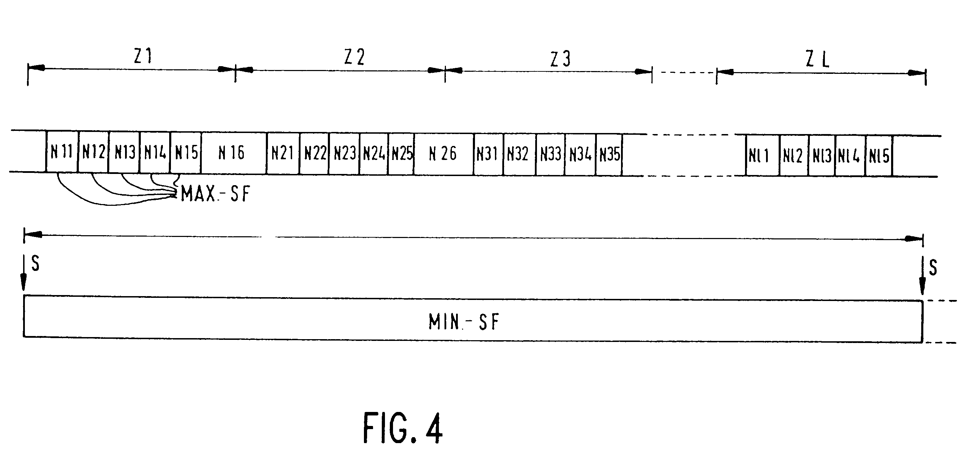

In Fig. 4 ist das Größenverhältnis der Maximum- und Minimum-Suchfenster verdeutlicht. In der Praxis haben sich ca. 20 Maximum-Suchfenster N11, N12,...;N21, N22,...;...; Nl1, Nl2,...pro Zeile Z1; Z2;...;Zl bewährt. Bei größerer Anzahl werden die Abschnitte zu kurz, um die niederfrequenten Rauschanteile zu erfassen. Der gefundene Spitzenwert des Rauschens ist dann zu klein. Die Länge des Minimum-Suchfensters MIN-SF hängt davon ab, wie schnell die Messung einer Änderung der Rauschamplitude folgen soll. Wenn die Minimum-Suche nur über ein Vollbild ausgedehnt wird, bleiben auch massive Änderungen des Bildinhaltes (z. B. Szenenwechsel) ohne Einfluß auf das Meßergebnis.

Eine Möglichkeit zur weiteren Verbesserung des Verfahrens besteht darin, die Maximum-Suche innerhalb eines zweidimensionalen Fensters vorzunehmen. Auf diese Weise können die niederfrequenten Rauschanteile durch die Messung noch besser erfaßt werden.

## Patentansprüche

1. Verfahren zur Bestimmung eines Rauschanteils in einem Videosignal, wobei durch Differenzbildung zwischen einem unverzögerten und einem verzögerten Videosignal mit nachfolgender Absolutwertbildung ein Bewegungssignal (L) gebildet wird,
dadurch gekennzeichnet,
daß zunächst innerhalb von mehreren Suchfenstern jeweils ein Amplituden-Maximum (M) des Bewegungssignals ermittelt wird, und daß danach aus den Maximalwerten der Suchfenster ein Minimum bestimmt wird, welches dem Spitzenwert des Rauschens entspricht.

2. Verfahren nach Anspruch 1,
dadurch gekennzeichnet,
daß die Ermittlung des Amplituden-Maximums während der horizontalen und vertikalen Austastlücken des Videosignals unterbrochen wird.

3. Verfahren nach Anspruch 1,
dadurch gekennzeichnet,
daß die Suchfenster eindimensional sind.

4. Verfahren nach Anspruch 3,
dadurch gekennzeichnet,
daß bis zu 20 Suchfenster pro Zeile vorgesehen sind.

5. Verfahren nach Anspruch 1,
dadurch gekennzeichnet,
daß die Suchfenster zweidimensional sind.

6. Verfahren nach Anspruch 1,
dadurch gekennzeichnet,
daß das Minimum aus den Maximalwerten mehrerer Suchfenster innerhalb mindestens einer Teilbildperiode bestimmt wird.

7. Schaltung zur Durchführung des Verfahrens nach Anspruch 1,
gekennzeichnet durch
- eine Einrichtung (3) zur Differenzwert- und Absolutwertbildung mit einem ersten Eingang für ein unverzögertes Videosignal und einem zweiten Eingang für ein verzögertes Videosignal,
- eine Maximum-Spitzenwert-Meßschaltung (4), deren Eingang mit dem Ausgang der Einrichtung (3) zur Differenzwert- und Absolutwertbildung verbunden ist, deren Starteingang jeweils zu Beginn eines Suchfensters mit einem Startimpuls (S) beaufschlagt ist,
- ein erstes Register (5) zum Speichern der von der Maximum-Meßschaltung (4) gelieferten Maximumwerte, dessen Eingang mit dem Ausgang der Maximum-Meßschaltung (4) verbunden ist und dessen Takteingang ebenfalls mit einem Startimpuls (S) beaufschlagt ist,
- eine Minimum-Spitzenwert-Meßschaltung (6), deren Eingang mit dem Ausgang des ersten Registers (5) verbunden ist, deren Starteingang jeweils zum Ende einer Austastlücke mit einem H- bzw. V-frequenten Impuls beaufschlagt ist,
- ein zweites Register (7) zum Speichern der von der Minimum-Spitzenwert-Meßschaltung (6) gelieferten Minimumwerte, dessen Eingang mit dem Ausgang der Minimum-Spitzenwert-Meßschaltung (6) verbunden ist und dessen Takteingang ebenfalls mit einem H- bzw. V-frequenten Impuls beaufschlagt ist und an dessen Ausgang das Rauschsignal (P) abnehmbar ist.

8. Schaltung nach Anspruch 7,
dadurch gekennzeichnet,
daß an der Maximum-Spitzenwert-Meßschaltung (4) ein Steuereingang (E) vorgesehen ist, an welchem zu Beginn der Austastlücke ein H- bzw. V-frequenter Impuls angelegt ist.

## Claims

1. A method of determining a noise component in a video signal, in which a motion signal (L) is formed by subtracting an undelayed and a delayed video signal and by subsequently forming the absolute value,
characterized in that
an amplitude maximum (M) of the motion signal is initially determined within a plurality of search windows and in that subsequently a minimum corresponding to the noise peak value is determined from the maximum values of the search windows.

2. A method as claimed in claim 1,
characterized in that
the determination of the amplitude maximum is interrupted during the horizontal and vertical blanking intervals of the video signal.

3. A method as claimed in claim 1,
characterized in that
the search windows are one-dimensional.

4. A method as claimed in claim 3,
characterized in that
up to 20 search windows per line are provided.

5. A method as claimed in claim 1,
characterized in that
the search windows are two-dimensional.

6. A method as claimed in claim 1,
characterized in that
the minimum value is determined from the maximum values of a plurality of search windows within at least one field period.

7. A circuit for performing the method as claimed in claim 1,
characterized by
- a device (3) for forming the difference value and the absolute value, having a first input for an undelayed video signal and a second input for a delayed video signal,
- a maximum peak value measuring circuit (4) whose input is connected to the output of the device (3) for forming the difference value and the absolute value, whose start input conveys a start pulse (S) each time at the start of a search window,
- a first register (5) for storing the maximum values supplied by the maximum peak value measuring circuit (4), whose input is connected to the output of the maximum peak value measuring circuit (4) and whose clock input also conveys a start pulse (S),
- a minimum peak value measuring circuit (6) whose input is connected to the output of the first register (5), whose start input conveys a H-frequency or V-frequency pulse at the end of a blanking interval,
- a second register (7) for storing the minimum values supplied by the minimum peak value measuring circuit (6), whose input is connected to the output of the minimum peak value measuring circuit (6) and whose clock input also conveys a H-frequency or V-frequency pulse and from whose output the noise signal (P) can be derived.

8. A circuit as claimed in claim 7,
characterized in that
a H-frequency or V-frequency pulse is applied to a control input (E) of the maximum peak value measuring circuit (4) at the start of the blanking interval.

## Revendications

1. Procédé de détermination d'une composante de bruit dans un signal vidéo, un signal de mouvement (L) étant formé par calcul d'une différence entre un signal vidéo non retardé et un signal vidéo retardé avec formation consécutive d'une valeur absolue,
caractérisé en ce
qu'un maximum d'amplitude (M) du signal de mouvement est respectivement déterminé d'abord au sein de plusieurs fenêtres de recherche et qu'ensuite, un minimum est déterminé à partir des valeurs maximales de la fenêtre de recherche, lequel minimum correspond à la valeur de pointe du bruit.

2. Procédé selon la revendication 1,
caractérisé en ce que la détermination du maximum d'amplitude est interrompue pendant les intervalles de suppression horizontaux et verticaux du signal vidéo.

3. Procédé selon la revendication 1,
caractérisé en ce que les fenêtres de recherche sont unidimensionnelles.

4. Procédé selon la revendication 3,
caractérisé en ce que 20 fenêtres de recherche maximum sont prévues par ligne.

5. Procédé selon la revendication 1,
caractérisé en ce que les fenêtres de recherche sont bidimensionnelles.

6. Procédé selon la revendication 1,
caractérisé en ce que le minimum est déterminé à partir des valeurs maximales de plusieurs fenêtres de recherche au sein d'au moins une période d'image partielle.

7. Circuit de mise en oeuvre du procédé selon la revendication 1,
caractérisé par
- un dispositif (3) en vue de la formation d'une valeur différentielle et d'une valeur absolue avec une première entrée pour un signal vidéo non retardé et une deuxième entrée pour un signal vidéo retardé,
- un circuit de mesure de la valeur de pointe maximale (4) dont l'entrée est reliée à la sortie du dispositif (3) en vue de la formation de la valeur différentielle de la valeur absolue, dont l'entrée de départ est respectivement amenée au début d'une fenêtre de recherche avec une impulsion initiale (S),
- un premier registre (5) en vue d'enregistrer les valeurs maximales délivrées par le circuit de mesure du maximum (4) dont l'entrée est reliée à la sortie du circuit de mesure du maximum (4) et dont l'entrée de cadence est également alimentée en une impulsion initiale (S),
- un circuit de mesure de valeur de pointe minimale (6) dont l'entrée est reliée à la sortie du premier registre (5) dont l'entrée de départ est respectivement alimentée à la fin d'un intervalle de suppression avec une impulsion de fréquence H ou V,
- un deuxième registre (7) en vue de l'enregistrement des valeurs minimales délivrées par le circuit de mesure de la valeur de pointe minimale (6), dont l'entrée est reliée à la sortie du circuit de mesure de la valeur de pointe minimale (6) et dont l'entrée de cadence est également alimentée en une impulsion de fréquence H ou V et à la sortie duquel le signal de bruit (P) peut être prélevé.

8. Circuit selon la revendication 7,
caractérisé en ce qu'une entrée de commande (E) à laquelle une impulsion de fréquence H ou V est appliquée au début de l'intervalle de suppression est prévue sur le circuit de mesure de la valeur de pointe maximale (4).
